Europäisches Patentamt

European Patent Office

Office européen des brevets

(11) Veröffentlichungsnummer: **0 341 377**

**A2**

(12) # EUROPÄISCHE PATENTANMELDUNG

(21) Anmeldenummer: 89102206.3

(22) Anmeldetag: 09.02.89

(51) Int. Cl.⁴: **B21D 43/20**

(30) Priorität: 12.05.88 DE 3816266

(43) Veröffentlichungstag der Anmeldung:
15.11.89 Patentblatt 89/46

(84) Benannte Vertragsstaaten:
CH FR IT LI

(71) Anmelder: SCHÖN & CIE GMBH
Im Gehörnerwald 2
D-6780 Pirmasens(DE)

(72) Erfinder: Jung, Klaus, Dipl.-Ing. c/o Keil &
Schaafhausen
Patentanwälte Eysseneckstrasse 31
D-6000 Frankfurt am Main 1(DE)

(74) Vertreter: Keil, Rainer A., Dipl.-Phys. Dr. et al
KEIL & SCHAAFHAUSEN Patentanwälte
Eysseneckstrasse 31
D-6000 Frankfurt am Main 1(DE)

(54) Aufnahme- und Stapelvorrichtung für aus einer Materialbahn aus gestanzten Scheiben mit Mittelloch.

(57) Die Erfindung bezieht sich auf eine Aufnahme-
und Stapelvorrichtung von z.B. bei einer Karrenstanze anfallenden, aus einer Materialbahn ausgestanzten Scheiben mit Mittelloch. Zur maschinellen Aufnahme und Abstapelung derartiger Lochscheiben
wird erfindungsgemäß ein Finger vorgesehen, welcher mit seinem unteren Ende so weit in das Mittelloch der Scheibe absenkbar ist, daß eine radial aufweitbare Manschette im Bereich des Mittellochs liegt
und die Scheibe durch Aufweiten der Manschette auf
dieser festgeklemmt wird, so daß die Scheibe mit
dem Finger angehoben und bei Entspannen der
Manschette wieder freigegeben und an vorgegebener Stelle abgelegt werden kann.

Fig. 1

**Aufnahme- und Stapelvorrichtung für aus einer Materialbahn aus gestanzten Scheiben mit Mitelloch**

Die Erfindung bezieht sich auf eine Aufnahme- und Stapelvorrichtung für z.B. bei einer Karrenstanze anfallenden aus einer Materialbahn ausgestanzten Scheiben mit Mittelloch.

Üblicherweise werden solche Scheiben von Hand nach dem Stanzen aus der Materialbahn genommen oder bei einer sog. Ausbrecheinrichtung über einer gelochten Tischplatte durch Stößel nach unten durchgestoßen. Die Ausbrechvorrichtung mit der gelochten Tischplatte arbeitet nicht immer zur Zufriedenheit, da die Scheiben eventuell abkippen und nicht sauber auf einen Stapel fallen. Außerdem muß die gelochte Tischplatte genau mit dem Stanzbild übereinstimmen, also immer an das Stanzmuster angepaßt werden.

Hiervon ausgehend ist es Aufgabe der vorliegenden Erfindung, eine Vorrichtung der gattungsgemäßen Art so auszubilden, daß sie baulich einfach und funktionssicher universeller und daher rationeller einsetzbar ist.

Diese Aufgabe wird erfindungsgemäß im wesentlichen gelöst durch einen Finger, welcher mit seinem unteren Ende wenigstens so weit in das Mittelloch der Scheibe absenkbar ist, daß eine radial aufweitbare Manschette im Bereich des Mittellochs liegt und die Scheibe durch Aufweiten der Manschette auf dieser festklemmbar und mit dem Finger anhebbar sowie nach dem Entspannen der Manschette wieder freigebbar ist. Der Finger kann auch so weit durch das Mittelloch hindurchgesteckt werden, bis die Scheibe oberhalb der aufweitbaren Manschette sitzt und nach dem Aufweiten der Manschette an dem Abgleiten nach unten gehindert wird.

Der erfindungsgemäße Finger kann also zunächst bei nicht aufgeweiteter Manschette durch das Mittelloch der Scheibe hindurchgesteckt werden. Dann wird die Manschette aufgeweitet, so daß die Scheibe auf der Manschette festgeklemmt wird oder, wenn sich die Manschette unterhalb der Scheibe befindet, der größte Durchmesser der Manschette größer ist als der Innendurchmesser des Mittellochs der Scheibe. In diesem aufgeweiteten Zustand der Manschette kann die Scheibe mittels des Fingers hochgehoben und auf einen Stapel abgesetzt werden. Der Finger kann aber auch nacheinander auf mehrere Scheiben mit Mittelloch aufgesetzt werden, um diese hochzuheben, wobei jeweils kurz vor dem Durchstecken der Manschette durch die jeweilige (nächste) Scheibe die Manschette kurzfristig in ihre nicht aufgeweitete (entspannte) Stellung überführt wird, um durch das Mittelloch hindurch geschoben werden zu können, um dann wieder aufgeweitet zu werden, so daß die betreffende Scheibe nicht mehr nach unten abgleiten kann.

Die reversible Aufweitung der Manschette kann man mittels eines weiteren vorteilhaften Erfindungsmerkmals dadurch bewerkstelligen, daß der Finger an einer Druckmittelzufuhr angeschlossen ist, über welche dem Innenraum der aus elastischem Material bestehenden Manschette Druckmittel z.B. Druckluft, zuführbar ist. Bei Druckmittelzufuhr baucht sich die Manschette, welche aus elastisch nachgiebigem Material besteht, aus, so daß die über der Manschette befindlichen Scheiben mit dem Finger angehoben werden können. Nach Druckentlastung (Entspannung) der Manschette können die auf dem Finger aufgenommenen Scheiben nach unten abgelegt, bzw. abgestreift werden. Hierdurch können mit ein und demselben Finger Scheiben mit unterschiedlicher Mittellochgröße und -form ausgehoben werden.

Damit der Finger die erforderliche Stabilität bewahrt, kann die Manschette bei einer weiteren Ausgestaltung der Erfindung auf einer mit vorzugsweise über den Umfang verteilten radialen Bohrungen versehenen Hülse des Fingers sitzen, deren Innenraum das Druckmittel zuführbar ist. Die radialen Bohrungen verbinden dabei den mit Druckmittel beaufschlagbaren Innenraum der Hülse mit der Innenfläche der Manschette, welche bei Verteilung der radialen Bohrungen über den Umfang der Hülse rundum im wesentlichen gleichmäßig bauchig aufgeweitet werden kann.

Um die Druckbeaufschlagung der Manschette noch weiter zu verbessern, können die radialen Bohrungen auch in auf der Außenseite der Hülse umlaufende Einstichnuten münden.

Um das Einführen des Fingers in das jeweilige Mittelloch der aufzunehmenden Scheibe zu erleichtern, kann der Finger an seinem unteren Ende eine abgerundete Kappe aufweisen.

Die Hülse ist in dem Finger, beispielsweise zwischen einem oberen an die Druckmittelzufuhr angeschlossenen Abschnitt und der unteren Kappe, dicht und fest eingesetzt, so daß das Druckmittel möglichst verlustfrei für die Aufweitung der Manschette zur Verfügung steht.

Eine einfache Montage der Manschette in den Finger ist dadurch möglich, daß die Hülse an ihrem unteren Ende ein Gewinde trägt, auf welche die Kappe aufgeschraubt ist. Die Manschette kann dann zwischen dem genannten oberen Abschnitt des Fingers und der Kappe eingespannt sein.

Dabei wird die Manschette vorzugsweise von der Kappe nach unten abgestützt, um eine sichere Lage in dem Finger beizubehalten.

Ferner ist es von besonderem Vorteil, wenn der Finger einschließlich der Kappe im Bereich der Manschette im wesentlichen hohlzylindrisch ausgebildet ist und die Manschette mit einem oberen und/oder unteren, vorzugsweise verjüngten Rand in eine innere Randvertiefung des oberen Abschnitts des Fingers bzw. der unteren Kappe aufgenommen und nach radial außen abgestützt ist.

Um das Aufnehmen der gelochten Scheiben mit der erfindungsgemäßen Vorrichtung zu erleichtern, wird die schon gestanzte, die aufzunehmenden Scheiben noch enthaltende Materialbahn vorteilhafterweise auf eine Unterlage aus elastisch nachgiebigem Material, wie einem weich eingestellten Schaumstoff, überführt. Die Dicke der Unterlage ist dabei so bemessen, daß der Finger, bei entspannter Manschette, so weit durch das Mittelloch der von der Unterlage aufzunehmenden Scheibe durch elastisches Ausweichen des Unterlagenmaterials hindurchgesteckt werden kann, daß die Manschette im Bereich oder unter der auf der Oberseite abgelegten und aufzunehmenden Scheibe zu liegen kommt.

Um ein weitgehend selbsttätiges Arbeiten der erfindungsgemäßen Aufnahme- und Stapelvorrichtung zu gewährleisten, ist der Finger höhenverstellbar und vorzugsweise auswechselbar an dem Halter eines quer und/oder längs zur Materialbahn verfahrbaren Karrens angebracht. Hierzu kann eine ähnliche Konstruktion dienen, wie sie auch für eine Karrenstanze verwendet wird, jedoch von einfacherer Bauart, da die bei einer Stanze auftretenden Kräfte nicht auftreten.

Die Unterlage für die gestanzte Materialbahn kann dabei als unter dem Bewegungsbereich des quer zur gestanzten Materialbahn verfahrbaren Karrens umlaufendes Transportband ausgebildet sein. Dadurch können die aus der gestanzten Materialbahn auszuhebenden gelochten Scheiben durch Vorwärtsbewegung der Materialbahn mittels des Transportbandes nacheinander in den Arbeitsbereich des Karrens und damit des Fingers gebracht werden. Auf diese Weise können bei hohem Durchsatz Finger und Mittelloch auf einfache Weise immer zur Deckung gebracht werden.

Der Karren ist vorzugsweise an dem oberen Querteil eines im wesentlichen U-förmigen Maschinenständers verfahrbar, wie dies für den Karren bei einer Karrenstanze an sich bekannt ist.

Gemäß einer Weiterbildung der Erfindung ist seitlich der vorzugsweise als Transportband ausgebildeten Unterlage der gestanzten Materialbahn, ebenfalls unterhalb des Querteils des Maschinenständers, ein weiteres Transportband für die Ablage der ggf. zu einem Stapel zusammengefaßten Scheiben vorgesehen. Mittels dieses Transportbandes können die aufgenommenen Scheiben im einzelnen oder im Stapel ihrer weiteren Verarbeitung oder Bestimmung zugeführt werden.

Damit die von dem Finger aufgenommenen Scheiben zügig von dem Finger auf das weitere Transportband gelangen, kann oberhalb des weiteren Transportbandes ein gabelförmiger Abstreifer angeordnet sein, in welchen der Finger mit einem Abschnitt oberhalb der von der aufgeweiteten Manschette gehaltenen Scheiben seitlich einfahrbar ist. Wird der Finger nach dem seitlichen Einfahren seines Abschnittes oberhalb der aufgenommenen Scheiben in den Abstreifer eingeführt und dann hochgezogen, fallen bei Entspannung der Manschette, die aufgenommenen Scheiben zuverlässig im Stapel nach unten auf das weitere Transportband.

Ein weiteres Merkmal der Erfindung besteht darin, daß die als Transportband ausgebildete Unterlage für die gestanzte Materialbahn in Fortsetzung des Stanztisches einer zugeordneten Stanzmaschine, vorzugsweise Karrenstanzmaschine, angeordnet ist. Hierdurch wird der Materialtransport von der Stanze zu der erfindungsgemäßen Aufnahme- und Stapelvorrichtung kurz und schnell. Insbesondere werden die ausgestanzten Lochscheiben der Aufnahme- und Stapelvorrichtung in der gleichen Folge bzw. dem gleichen Muster zugeführt, wie sie aus der Materialbahn ausgestanzt worden sind.

Hierbei ist es zweckmäßig, die als Transportband ausgebildete Unterlage synchron mit den Transportwalzen o.dgl. Materialantrieb einer zugeordneten Stanzmaschine, vorzugsweise Karrenstanzmaschine, laufen zu lassen, so daß alle aus der Materialbahn ausgestanzten Lochscheiben unverzüglich ausgehoben und abgestapelt werden können, ohne daß es einen Rückstau oder unerwünschte Wartezeiten bei der erfindungsgemäßen Aufnahme- und Stapelvorrichtung gibt.

Die Bewegung des Karrens für den Finger kann nach jedem vorgegebenen Stanzbild programmierbar sein, so daß die erfindungsgemäße Aufnahme- und Stapelvorrichtung in ihrem Aufbau unverändert für die verschiedensten Stanzmuster einsetzbar ist.

Dabei kann insbesondere die Bewegung des Karrens für den Finger in gleicher Weise programmiert sein, wie die Bewegung des Karrens einer zugeordneten Karrenstanze, so daß die Finger für die Aufnahme der aus der Materialbahn ausgestanzten und auf die Unterlage der Aufnahme- und Stapelvorrichtung überführten Materialbahn jeweils die richtige Position einnimmt.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der vorliegenden Erfindung auch unabhängig von ihrer Zusammenfassung in den Ansprüchen oder deren Rückbeziehung.

Es zeigen:

Fig. 1 In Seitenansicht eine die Erfindung aufweisende Aufnahme- und Stapelvorrichtung in Zuordnung zu einer Karrenstanze, jeweils teilweise entlang der Linie I-I von Fig. 2 geschnitten,

Fig. 2 die Aufnahme- und Stapelvorrichtung nach Fig. 1 aus der Ansicht II von Fig. 2,

Fig. 3 schematisch in Draufsicht den Abstreifer der Aufnahme- und Stapelvorrichtung von Fig. 2,

Fig. 4 in Draufsicht einen Abschnitt der Materialbahn nach Aufnahme der ausgestanzten Lochscheiben,

Fig. 5 teilweise geschnitten, ein Ausführungsbeispiel des Fingers der erfindungsgemäßen Aufnahme- und Stapelvorrichtung, wobei der Finger schon teilweise durch das Mittelloch der aufzunehmenden Scheibe hindurchgeführt ist,

Fig. 6a bis 6c schematisch in mehreren Stufen den Aufnahmevorgang einer Lochscheibe mit dem erfindungsgemäßen Finger,

Fig. 7 schematisch die Aufnahme eines ganzen Stapels von Lochscheiben mit dem erfindungsgemäßen Finger, und

Fig. 8 in Seitenansicht eine andere die Erfindung aufweisende Ausführungsform, bei welcher Karrenstanze und Aufnahme- und Stapelvorrichtung zu einer Einheit zusammengefaßt sind.

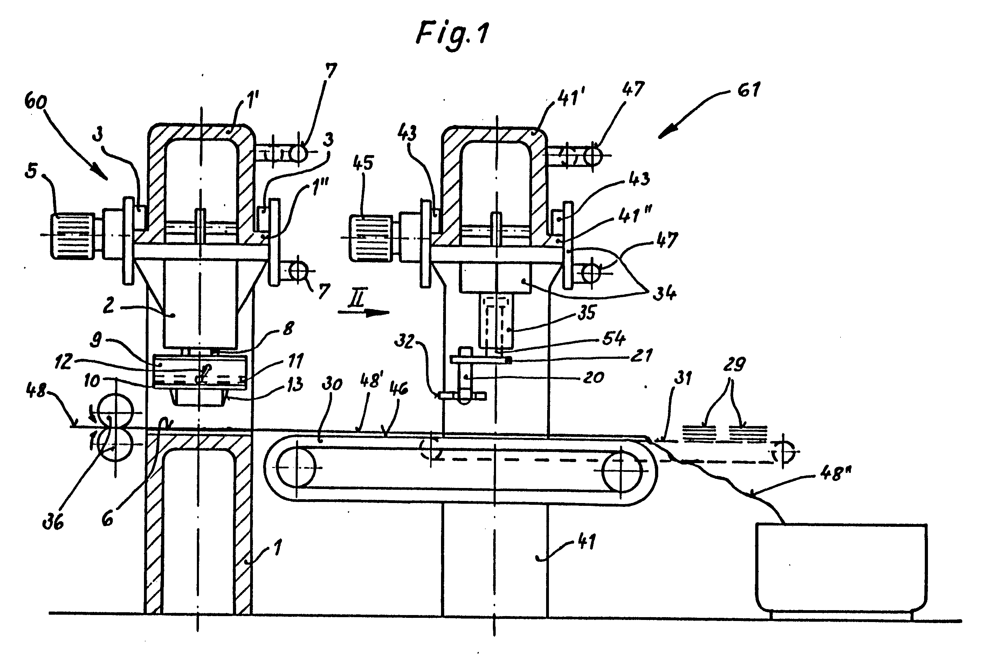

Die in Fig. 1 dargestellte Aufnahme- und Stapelvorrichtung 61 kann im prinzipiellen Maschinenaufbau einer Karrenstanze 60 entsprechen, wie sie dort neben der Vorrichtung 61 dargestellt ist.

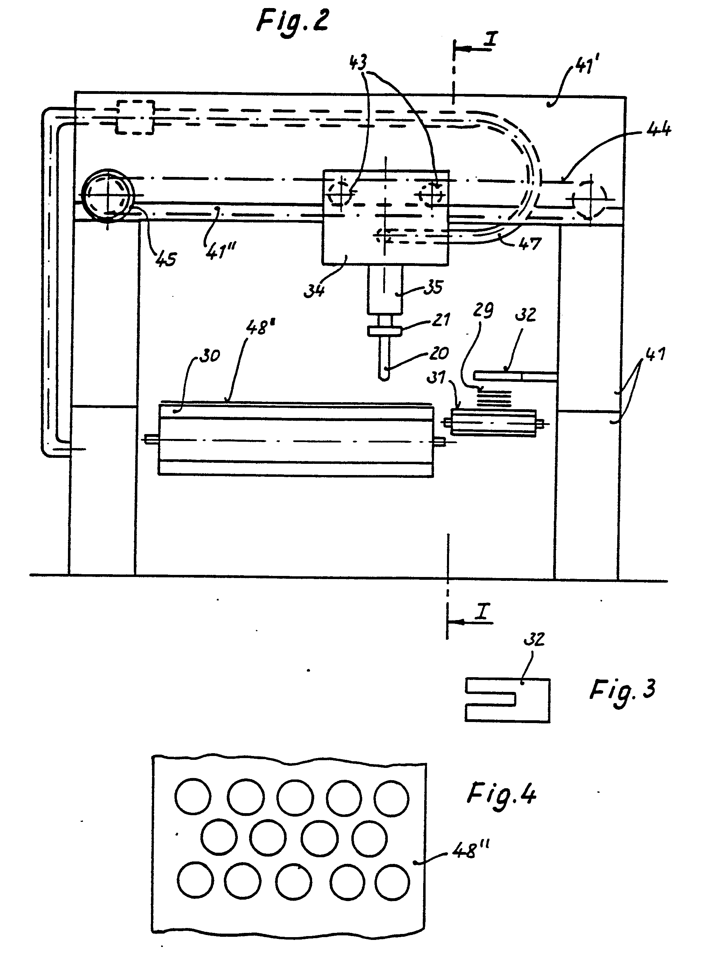

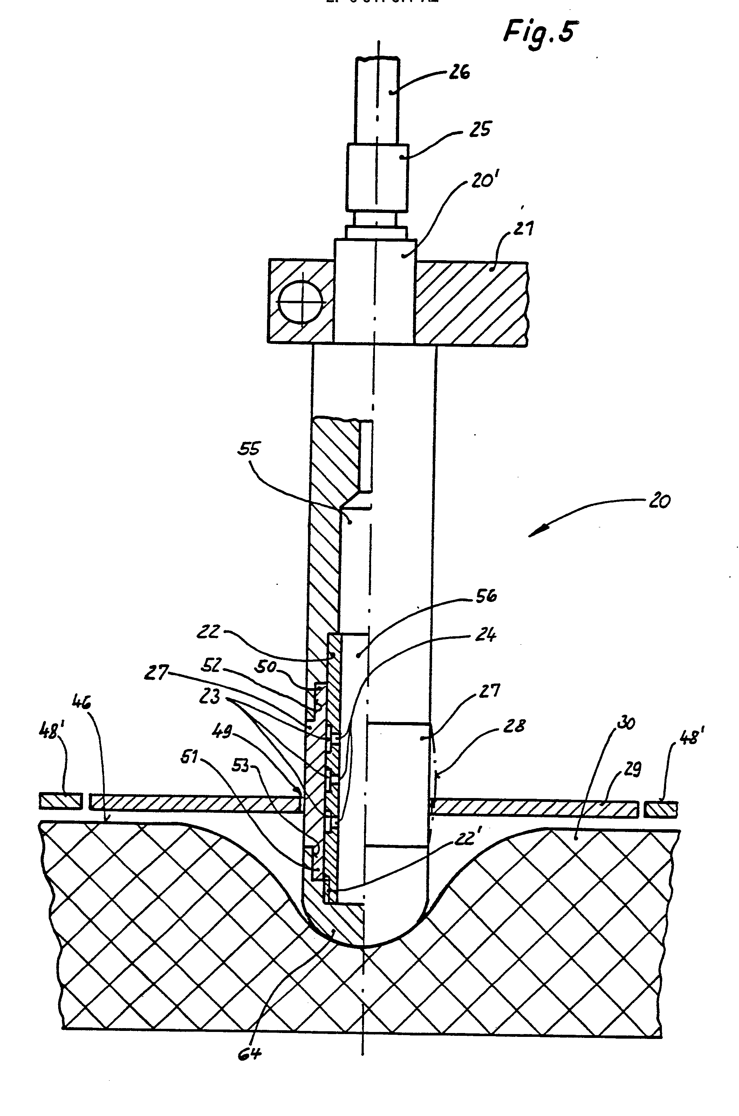

Die Karrenstanze 60 hat einen Maschinenständer 1, an dessen oberem Querteil 1' eine Führung 1" vorgesehen ist, entlang welcher ein Karren 2 auf Rollen 3 laufen kann. Der Antrieb des Karrens 2 erfolgt über eine Kette und einen Getriebebremsmotor 5. Der Antrieb kann auch über andere im Maschinenbau übliche Elemente erfolgen. Die Zufuhr des zum Stanzhub erforderlichen Mediums erfolgt über eine biegsame Zuführung 7. Im Karren 2 ist ein Kolben 8 auf- und abbeweglich geführt. An seinem unteren Ende trägt der Kolben 8 einen Druckfuß 9, an welchem eine Messeraufnahmeplatte 11 - mit einem Stanzmesser 13 über Führungswinkel 10 gehalten ist. Gegen Verschieben ist die Messeraufnahmeplatte 11 durch eine Stellschraube 12 gesichert. Die zu stanzende Materialbahn 48 wird von Transportwalzen 36 über einen von dem Maschinengestell 1 gebildeten Stanztisch 6 geführt. Durch die programmgesteuerte Querbewegung des Karrens 2 und die programmgesteuerte Längsbewegung der Materialbahn 48 werden mit einem Mittelloch 49 versehene Scheiben 29 in vorgegebenem Stanzmuster (vgl. Fig. 4) ausgestanzt. Die gestanzte Materialbahn 48' wird zusammen mit den ausgestanzten Lochscheiben 29 auf eine als Transportband ausgebildete Unterlage 30 überführt. Die Unterlage 30 bildet Teil der Aufnahme- und Stapelvorrichtung 61. Diese hat ähnlich wie die Karrenstanze 60 ein Maschinengestell 41, an dessen oberem Querteil 41' Führungen 41" für die Rollen 43 eines quer zur Unterlage 30 verfahrbaren Karrens 34 vorgesehen sind. Der Antrieb des Karrens 34 erfolgt über einen Getriebebremsmotor 45. Am quer verfahrbaren Karren 34 ist eine Kolben-Zylinder-Anordnung 35 ausgebildet, zu welcher das erforderliche Medium über Zuführungen 47 zugeführt wird. Die Kolbenstange 54 der Kolben-Zylinder-Anordnung 35 trägt einen Halter 21 mit einem senkrecht nach unten weisenden Finger 20, dessen Aufbau in Fig. 5 im einzelnen veranschaulicht ist

Der Finger 20 ist an seinem oberen Ende 20' in dem Halter 21 auswechselbar eingeklemmt. An das obere Ende 20' des Fingers 20 schließt sich ein Druckmittelanschluß 25 mit einer Druckmittelzufuhr-Leitung 26 an. Über diese wird ein Druckmittel in den Innenraum 55 des Fingers 20 geführt. In dem Finger 20 ist in Angrenzung an den Innenraum 55 eine Hülse 22 dicht und dauerhaft befestigt. Die Hülse 22 weist über den Umfang verteilte radiale Bohrungen 24 auf, welche in im Außenumfang der Hülse 22 vorgesehene Einstichnuten 23 münden. Die Hülse 22 hat an ihrem unteren Ende 22' ein Gewinde für das Aufschrauben einer Kappe 64. In dem Bereich zwischen oberem Abschnitt des Fingers 20 und der Kappe 64 sitzt auf der Hülse 22 eine Manschette 27 aus elastisch nachgiebigem Material, z.B. aus Gummi. Die Manschette 27 hat einen oberen und einen unteren verjüngten Rand 50, 51, welcher jeweils in inneren Randvertiefungen 52, 53 des oberen Abschnitts des Fingers 20 bzw. der Kappe 64 aufgenommen sind und sich dort dichtend nach außen abstützen. Der mittlere Abschnitt der Manschette 27 zwischen oberem Abschnitt des Fingers 20 und unterer Kappe 64 bildet in diesem Bereich den Außenmantel des Fingers 20. Der Innenraum 55 des oberen Abschnitts des Fingers 20 steht mit dem Innenraum 56 der starren Hülse 22 in Strömungsverbindung, so daß bei Druckbeaufschlagung über den Druckmittelanschluß 25 Druck über die radialen Bohrungen 24 und die Einstichnuten 23 auf der Innenfläche der Manschette 27 ansteht. Unter der Wirkung des Druckes kann sich die Manschette 27, wie an der Ausbauchung 28 angedeutet, radial aufweiten, da sie mit ihren beiden Rändern 50 und 51 luftdicht zwischen Hülse 22 und oberem Abschnitt des Fingers 20 bzw. der Kappe 64 eingeklemmt ist.

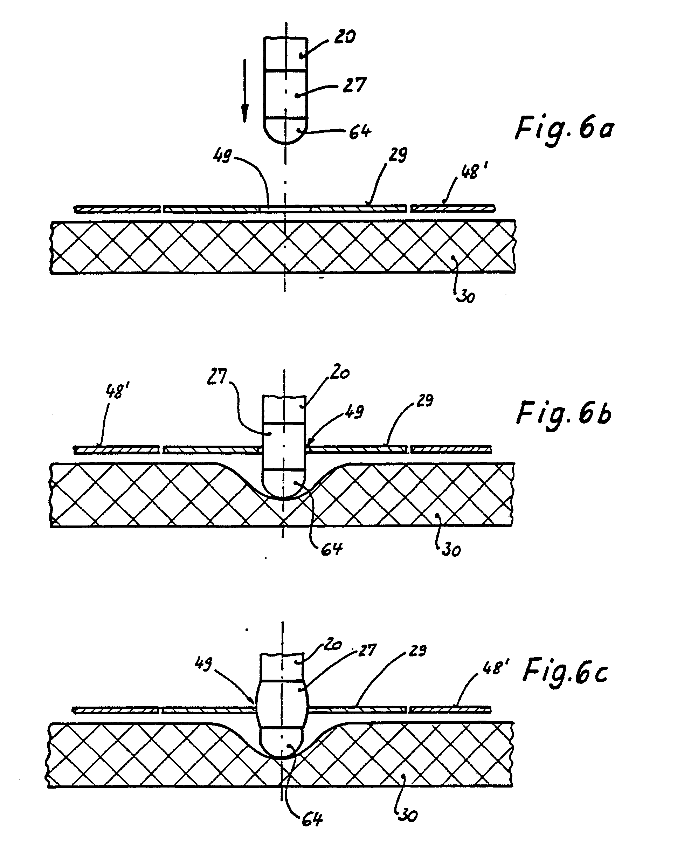

Führt man den entsprechend im Durchmesser dimensionierten Finger 20 durch das Mittelloch 49 einer anzuhebenden Scheibe 29 so weit ein, daß die Manschette 27 im Bereich des Mittellochs 49 liegt und beaufschlagt den Finger 20 und damit die Manschette 27 mit Druckmittel, so weitet sich die Manschette 27 entsprechend der Ausbauchung 28 auf, so daß die Scheibe 29 festgehalten wird und mit dem Finger 20 hochgehoben werden kann (Fig. 6a bis 6c). Entsprechend der Darstellung liegt die gestanzte Materialbahn 48' zu diesem Zeitpunkt auf der Oberseite 46 der aus elastisch nachgiebigem Material, beispielsweise weich eingestelltem Schaumstoff, bestehenden Unterlage 30 einer solchen Stärke, daß der Finger 20 unter Zusammendrücken des elastisch nachgiebigen Materials so weit durch das Mittelloch 49 hindurchgeführt werden kann, bis die Manschette 27 in den Bereich der aufzunehmenden Scheibe 29 gelangt oder darunter liegt.

Die Druckmittelzufuhr zu dem Finger 20 wird so gesteuert, daß unmittelbar beim Eintauchen desselben in das Mittelloch 49 der Scheibe 29 das Druckmittel aus der Manschette 27 entweichen und nach dem Eintauchen des Fingers 20 im tiefsten Punkt das Druckmittel wieder zugeführt wird, wobei sich die Manschette 27 ausbaucht, um die Scheibe 29 festzuklemmen oder über sich zu halten.

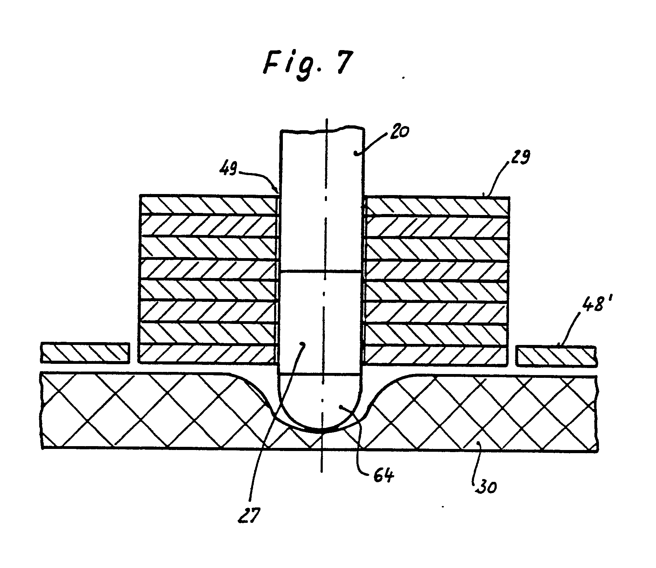

Auf diese Weise ist es auch möglich, nacheinander viele Scheiben 29 auf dem Finger 20 aufzunehmen. Jeweils beim Eintauchen des Fingers 20 in die nächste Scheibe 29 schiebt sich die vorherige Scheibe 29 etwas nach oben, da in diesem Augenblick die Manschette 27 entspannt ist. Oberhalb der Manschette 27 sind die Scheiben 29 lose auf dem Finger 20 gelagert und ggf. gegen Kippen lose geführt (Fig. 7).

Seitlich der Unterlage 30 und unterhalb des Querteils 41' befindet sich in der Aufnahme- und Stapelvorrichtung 61 ein weiteres Transportband 31 für die Aufnahme und den Abtransport der von dem Finger 20 abgelegten Scheibenstapel. Diese werden abgelegt, indem der Finger 20 mittels des Karrens 34 über das Transportband 31 gefahren und die Manschette 27 entspannt wird. Das Absenken des Scheibenstapels kann dadurch verbessert werden, daß an dem Maschinengestell 41 ein gabelförmiger horizontaler Abstreifer 32 oberhalb des Transportbandes 31 in einer Höhe angebracht ist, daß der Finger 20 mit dem darauf aufgenommenen Scheibenstapel so in den Schlitz eingefahren werden kann, daß sich der Stapel unterhalb des Abstreifers 32 befindet. Wird dann der Finger 20 bei entspannter Manschette 27 hochgezogen, so legt sich der Scheibenstapel auf das Transportband 31 ab.

Die als Transportband ausgebildete Unterlage 30, auf welche die gestanzte Materialbahn 48' überführt wird, läuft etwa synchron mit den Transportwalzen 26 der Karrenstanze 1. Nach der Aufnahme der Scheiben 29 aus der Materialbahn 48' wird der verbleibende Materialbahnrest 48'' als Abfall weggeführt.

Die Aufnahme- und Stapelvorrichtung 61 und die Karrenstanze 60 können für die verschiedensten, aber untereinander gleichen Stanzbilder programmiert werden. Auch die Zahl der aufzunehmenden Lochscheibe 29 kann bis zu einer Höchstzahl beliebig eingestellt werden.

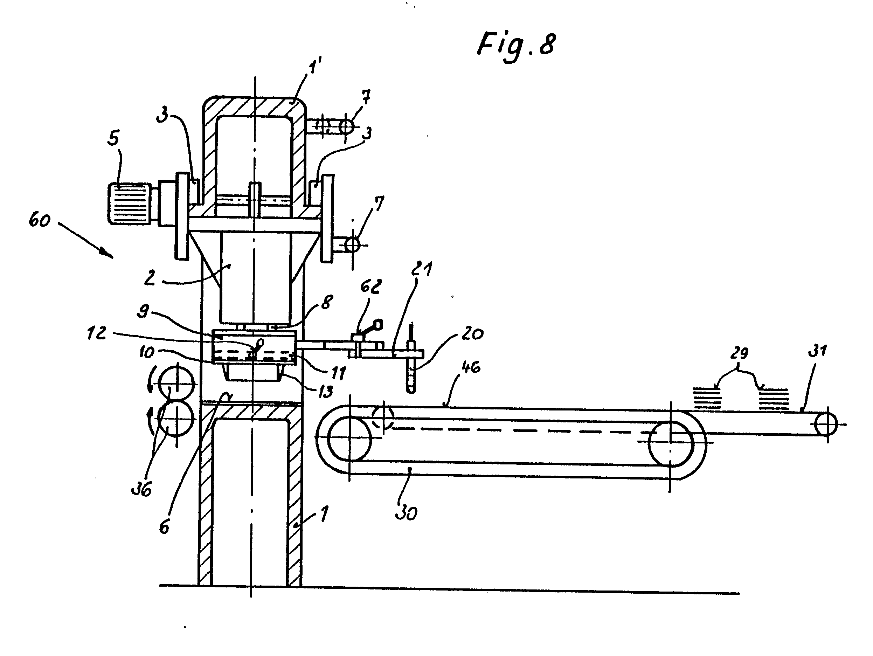

In einer weiteren Ausführungsform der Erfindung, wie sie in Fig. 8 veranschaulicht ist, ist der Halter 21 mit dem Finger 20 unmittelbar am Karren 2 der Karrenstanze so angebracht, daß er über der Unterlage 30 steht und mit den für den Karren 2 vorgesehenen Antriebsmitteln bewegbar ist. Dabei kann der Finger 20 räumlich gegenüber dem Stanzbild, z.B. über Klemmschrauben 62, verstellbar sein. Auf diese Weise wird im gleichen Takt mit dem Stanzvorgang aufgenommen. Der Karren 2 kann in zeitlichen Abständen zum Absetzen des jeweiligen auf den Finger 20 entstehenden Teilstapels eine gesonderte Querbewegung machen, bis der Finger 20 über dem Transportband 31 steht.

Bezugszeichenliste:

1 Maschinenständer
1' Querteil
1'' Führung
2 Karren
3 Rollen
5 Getriebebremsmotor
6 Stanztisch
7 Zuführung
8 Kolben
9 Druckfuß
10 Führungswinkel
11 Messerentnahmeplatte
12 Stellschraube
13 Messer
20 Finger
20' Ende
21 Halter
22 Hülse
22' Ende
23 Einstichnuten
24 Bohrungen
25 Druckmittelanschluß
26 Leistung
27 Manschette
28 Ausbauchung
29 Scheibe
30 Unterlage
31 Transportband
32 Abstreifer
34 Karren
35 Kolben-Zylinder-Anordnung

36 Transportwalzen
41 Maschinenständer
41′ Querteil
41″ Führung
43 Rollen
44 Kette
45 Getriebemotor
46 Oberseite
47 Zuführung
48 Materialbahn
48′ gestanzte Materialbahn
48″ Materialbahnrest
49 Mittelloch
50 Rand
51 Rand
52 Vertiefung
53 Vertiefung
54 Kolbenstange
55 Innenraum
56 Innenraum
60 Karrenstanze
61 Aufnahme- und Stapelvorrichtung
62 Klemmschrauben
64 Kappe

## Ansprüche

1. Aufnahme- und Stapelvorrichtung für zum Beispiel bei einer Karrenstanze (60) anfallenden, aus einer Materialbahn (48) ausgestanzten Scheiben (29) mit Mittelloch (49), gekennzeichnet durch einen Finger (20), welcher mit seinem unteren Ende wenigstens so weit in das Mittelloch (49) der Scheibe (29) absenkbar ist, daß eine radial aufweitbare Manschette (27, 28) im Bereich des Mittellochs (49) liegt und die Scheibe (29) durch Aufweiten der Manschette (27, 28) auf dieser festklemmbar und mit dem Finger (20) anhebbar sowie nach dem Entspannen wieder freigebbar ist.

2. Vorrichtung nach Anspruch 1, dadurch gekennzeichnet, daß der Finger (2) an eine Druckmittelzufuhr (25, 26) angeschlossen ist, über welche dem Innenraum der aus elastischem Material bestehenden Manschette (27, 28) Druckmittel z.B. Druckluft, zuführbar ist.

3. Vorrichtung nach Anspruch 1 oder 2, dadurch gekennzeichnet, daß die Manschette (27, 28) auf einer mit vorzugsweise über den Umfang verteilten radialen Bohrungen (24) versehenen Hülse (22) des Fingers (20) sitzt, deren Innenraum das Druckmittel zuführbar ist.

4. Vorrichtung nach Anspruch 3, dadurch gekennzeichnet, daß die radialen Bohrungen (24) in auf der Außenseite der Hülse (22) umlaufende Einstichnuten (23) münden.

5. Vorrichtung nach einem der Ansprüche 1 bis 4, dadurch gekennzeichnet, daß der Finger (20) an seinem unteren Ende eine abgerundete Kappe (64) aufweist.

6. Vorrichtung nach einem der Ansprüche 3 bis 5, dadurch ·gekennzeichnet, daß die Hülse (22) in dem Finger (20) dicht und fest eingesetzt ist.

7. Vorrichtung nach einem der Ansprüche 3 bis 6, dadurch gekennzeichnet, daß die Hülse (22) an ihrem unteren Ende (22′) ein Gewinde trägt, auf welche die Kappe (64) aufgeschraubt ist.

8. Vorrichtung nach einem der Ansprüche 5 bis 7, dadurch gekennzeichnet, daß die Manschette (27, 28) von der Kappe (64) nach unten abgestützt wird.

9. Vorrichtung nach einem der Ansprüche 5 bis 8, dadurch gekennzeichnet, daß der Finger (20) einschließlich der Kappe (64) im Bereich der Manschette (27, 28) im wesentlichen hohlzylindrisch ausgebildet ist und die Manschette (27, 28) mit einem oberen und/oder einem unteren, vorzugsweise verjüngten Rand (50, 51) in einer inneren Randvertiefung (52, 53) des Fingers (20) bzw. der Kappe (64) aufgenommen und nach außen abgestützt ist.

10. Vorrichtung nach einem der Ansprüche 1 bis 9, dadurch gekennzeichnet, daß die schon gestanzte, die aufzunehmenden Scheiben (29) noch enthaltende Materialbahn (48′) zum Aufnehmen der Scheibe (29) mit dem Finger (20) auf eine Unterlage (30) aus elastisch nachgiebigem Material, wie einem weich eingestellten Schaumstoff, überführt wird.

11. Vorrichtung nach einem der Ansprüche 1 bis 10, dadurch gekennzeichnet, daß der Finger (20) höhenverstellbar und vorzugsweise auswechselbar an dem Halter (21) eines quer und/oder längs zur Materialbahn (48) verfahrbaren Karrens (34) angebracht ist.

12. Vorrichtung nach einem der Ansprüche 1 bis 11, dadurch gekennzeichnet, daß die Unterlage (30) für die gestanzte Materialbahn (48′) als unter dem Bewegungsbereich des quer zur gestanzten Materialbahn (48′) verfahrbaren Karrens (34) umlaufendes Transportband ausgebildet ist.

13. Vorrichtung nach einem der Ansprüche 1 bis 12, dadurch gekennzeichnet, daß der Karren (34) an dem oberen Querteil (41′) eines im wesentlichen U-förmigen Maschinenständers (41) verfahrbar ist.

14. Vorrichtung nach einem der Ansprüche 1 bis 13, dadurch gekennzeichnet, daß seitlich der vorzugsweise als Transportband ausgebildeten Unterlage (30) der gestanzten Materialbahn (48′) unterhalb des Querteils (41′ des Maschinenständers (41) ein weiteres Transportband (31) für die Ablage der ggf. zu einem Stapel zusammengefaßten Scheiben (29) vorgesehen ist.

15. Vorrichtung nach einem der Ansprüche 1 bis 14, dadurch gekennzeichnet, daß oberhalb des weiteren Transportbandes (31) ein gabelförmiger Abstreifer (32) angeordnet ist, in welchen der Finger (31) mit einem Abschnitt oberhalb der von der aufgeweiteten Manschette (27, 28) gehaltenen Scheiben (29) seitlich einfahrbar ist.

16. Vorrichtung nach einem der Ansprüche 12 bis 15, dadurch gekennzeichnet, daß die als Transportband ausgebildete Unterlage (30) in Fortsetzung des Stanztisches (6) einer zugeordneten Stanzmaschine, vorzugsweise Karrenstanzmaschine (60), angeordnet ist.

17. Vorrichtung nach einem der Ansprüche 1 bis 16, dadurch gekennzeichnet, daß die als Transportband ausgebildete Unterlage (30) synchron mit den Transportwalzen (36) o.dgl. Materialbahnantrieb einer zugeordneten Stanzmaschine, vorzugsweise Karrenstanzmaschine (60), läuft.

18. Vorrichtung nach einem der Ansprüche 1 bis 17, dadurch gekennzeichnet, daß die Bewegung des Karrens (34) für den Finger (20) nach einem vorgegebenen Stanzbild programmierbar ist.

19. Vorrichtung nach einem der Ansprüche 1 bis 18, dadurch gekennzeichnet, daß die Bewegung des Karrens (34) für den Finger (20) in gleicher Weise programmiert ist, wie die Bewegung des Karrens (2) einer zugeordneten Karrenstanze (60).

Fig.1

**Fig.2**

**Fig.3**

**Fig.4**

Fig.5

Fig.6a

Fig.6b

Fig.6c

# Fig. 7

*Fig.8*

EP 0 341 377 A2